# EUROPÄISCHE PATENTSCHRIFT

(11) **EP 3 153 629 B1**
(45) Veröffentlichungstag und Bekanntmachung des Hinweises auf die Patenterteilung: **25.07.2018**
(21) Anmeldenummer: 16190135.0
(22) Anmeldetag: 22.09.2016
(51) Int. Cl.: E02F 3/413, E02F 3/42, E02F 9/00, F15B 15/06, B66C 3/00, B66C 3/16

(54) **HYDRAULISCHER SCHWENKANTRIEB SOWIE GREIFER MIT EINEM SOLCHEN SCHWENKANTRIEB**
HYDRAULIC PIVOT DRIVE AND GRIPPER WITH SUCH A PIVOT DRIVE
ENTRAÎNEMENT PIVOTANT HYDRAULIQUE ET DISPOSITIF DE PRÉHENSION COMPRENANT UN TEL ENTRAÎNEMENT PIVOTANT

(30) Priorität: 06.10.2015 DE 202015006973 U
(43) Veröffentlichungstag der Anmeldung: 12.04.2017
(73) Patentinhaber: Kinshofer GmbH, 83666 Waakirchen (DE)
(72) Erfinder: Friedrich, Thomas, 83727 Schliersee (DE)
(74) Vertreter: Thoma, Michael

(56) Entgegenhaltungen:
- WO-A1-2007/101679
- DE-U1- 20 107 206
- DE-U1- 20 319 227
- DE-U1-202004 013 158
- DE-U1-202006 013 101
- US-A- 3 187 592

## Beschreibung

Die vorliegende Erfindung betrifft einen hydraulischen Schwenkantrieb für einen Greifer, der zwei zangenartig bewegbare Greifarme oder -schalen besitzt, mit zwei in einem Antriebsgehäuse drehbar gelagerten, zueinander parallelen Schwenkwellen, deren Wellenenden mit den Greifarmen oder -schalen verbindbar sind, wobei die Schwenkwellen jeweils zwei zueinander gegenläufige Schraubeingriffsabschnitte besitzen, mit denen zwei mittels Hydraulikdruck gegenläufig verfahrbare Kolben zum Antreiben der Schwenkwellen in Schraubeingriff stehen.

Ein Schwenkantrieb für einen Zweischalengreifer nach dem Stand der Technik ist beispielsweise aus der DE 201 07 206 U1 bekannt, bei dem die Schwenkwellen jeweils Teil eines Hydraulikmotors sind, der von dem als geschlossenes Gehäuse ausgebildeten Schalenträger umschlossen ist. Auf den beiden Schwenkwellen, die die Greifarme bzw. Greifschalen auf- und zuschwenken, sitzen jeweils Rohrstücke, die längsverschieblich, jedoch drehfest geführt sind und mit der jeweiligen Schwenkwelle in Schraubeingriff stehen, so dass eine Längsverschiebung der Rohrstücke zu einer Drehung der Schwenkwellen führt. Die Längsverschiebung der Rohrstücke wird mittels eines gemeinsamen Mittelstücks bewirkt, das die Rohrstücke verbindet und als Kolben ausgebildet ist, der im Inneren des Gehäuses, das für den Kolben den Zylinder bildet, aufgenommen und durch entsprechende Druckkammern mit Hydraulikdruck beaufschlagbar ist.

Da bei diesem bekannten Schwenkantrieb mit zunehmendem Abstand der Schwenkwellen das Kolben-/Zylindervolumen immer größer wird und dadurch kaum noch beherrschbare Kräfte auf das Gehäuse wirken, schlägt die DE 203 19 227 U1 vor, nicht das gesamte Wellenantriebsstück als Kolben auszubilden, sondern in dem Wellenantriebsstück Plungerkolben vorzusehen, die durch Hydraulikdruck in entsprechenden Plungerkolbenkammern relativ zum Wellenantriebsstück bewegbar sind und hierdurch das Wellenantriebsstück in der gewünschten Weise hin- und herverschieben können.

Bei hydraulischen Schwenkantrieben dieser Gattung treten an den Lagerungen der Schwenkwellen hohe Axialkräfte auf, die daraus resultieren, dass die Linearbewegung des Wellenantriebsstücks durch einen Schraubeingriff in die gewünschte Schwenkwellendrehung umgesetzt wird. Um die notwendigen hohen Schwenkwellenmomente erzeugen zu können, muss das Wellenantriebsstück mit entsprechend hohen Kräften axial angetrieben werden, was zu entsprechend hohen axialen Reaktionskräften in den Lagerungen der Schwenkwellen führt. Um diese Kräfte abzufangen, werden die Schwenkwellen üblicherweise mittels Axialgleitlagern gelagert. Dies ermöglicht die gattungstypische kompakte Bauweise des Schwenkantriebs und des Schalenträgers, dessen Außenabmessungen durch die anzuschließenden Greiferschalen nicht beliebig erweiterbar sind. Eine solche Axialgleitlagerung der Schwenkwellen hat sich allerdings als nachteilig für den Wirkungsgrad des Antriebs herausgestellt.

Um den Lagerwiderstand der Schwenkwellenlagerung zu verringern, schlägt die DE 20 2004 013 158 U1 hydrostatische Axiallager für die Schwenkwellen vor, die von dem Hydraulikdruck gespeist sind, mittels dessen das Wellenantriebsstück verschoben wird. Diese Lösung erfordert jedoch wiederum einen entsprechenden Bauaufwand, zudem müssen spezielle konstruktive Maßnahmen ergriffen werden, um die Drucktaschen der hydrostatischen Lager in ausreichendem Umfang mit Druck zu versorgen.

Die DE 20 2006 013 101 U1 schlägt zur Lösung der genannten Lagerproblematik und Bändigung der Axialkräfte die Verwendung zweier gegenläufig verfahrender Kolben vor, die mit jeweils beiden Schwenkwellen in Schraubeingriff stehen, und dabei gegenläufige Schraubeingriffabschnitte der Schwenkwelle nutzen, sodass ein Auseinanderfahren der Kolben sowie ein umgekehrtes Zusammenfahren der Kolben die Schwenkwellen in die eine oder andere Richtung verdreht. Durch solche gegenläufig verfahrbaren Kolben kann der axiale Lagerdruck minimiert werden, da sich die Antriebskräfte und Reaktionskräfte der Kolben weitgehend gegenseitig kompensieren. Allerdings kommt es bei dem vorbekannten Schwenkantrieb gemäß DE 20 2006 013 101 U1 zu relativ hohen Querkräften auf das Gehäuse in Richtung quer zu den Wellenlängsachsen, die eine entsprechend massive und daher schwere Ausbildung des Gehäuses notwendig machen. Durch die großflächigen Kolben besitzt auch der Gehäusemantel, der die Zylinderdruckkammern begrenzt, eine entsprechend große Fläche, die bei Hydraulikdruckbeaufschlagung zu großen Kräften auf das Gehäuse führt. Zusätzlich zu den genannten Querkräften ergeben sich auch hohe Axialkräfte auf die seitlichen Gehäusedeckel, durch die die Schwenkwellen hindurchragen. Ungeachtet der Kompensation der Lagerkräfte auf die Wellenlager bleiben die Lagerdeckel auch bei gegenläufig verfahrenden Kolben unverändert stark vom Hydraulikdruck belastet, sodass auch diese Lagerdeckel und deren Befestigung am Gehäusegrundkorpus entsprechend massiv ausgebildet sein müssen.

Der vorliegenden Erfindung liegt daher die Aufgabe zugrunde, einen verbesserten Schwenkantrieb der genannten Gattung zu schaffen, der Nachteile des Standes der Technik vermeidet und letzteren in vorteilhafter Weise weiterbildet. Vorzugsweise soll eine leichtere Bauweise des Antriebsgehäuses erzielt werden, ohne hierfür Abstriche beim Antriebsmoment der Schwenkwellen und der Greifkraft des Greifens in Kauf nehmen zu müssen.

Erfindungsgemäß wird diese Aufgabe durch einen hydraulischen Schwenkantrieb nach Anspruch 1 sowie einen Greifer nach Anspruch 16 gelöst. Bevorzugte Ausgestaltungen der Erfindung sind Gegenstand der Unteransprüche.

Es wird also vorgeschlagen, jedem Kolben zwei unterschiedlich große und verschieden konturierte Zylinderdruckkammern zuzuordnen, um für jede der vor- und zurückgehenden Stellbewegungen die Kolbenquerschnittsfläche bestmöglich anpassen und die Druckverhältnisse passend auswählen zu können. Um in den verschieden konturierten und bemessenen Zylinderdruckkammern laufen zu können, ist jeder der Kolben mit verschiedenen Kolbenabschnitten versehen, die an die jeweilige Zylinderdruckkammer angepasst sind. Erfindungsgemäß besitzen die Kolben jeweils zwei außenmantelflächenseitige Kolbenlaufflächen, die im Querschnitt unterschiedlich geformt sind und in unterschiedlich großen und im Querschnitt unterschiedlich geformten, vom Antriebsgehäuse gebildeten Zylinderdruckkammern laufend angeordnet sind. Durch die gestufte, abschnittsweise variierende Konturierung der Kolben können unterschiedlich hohe Stellkräfte und auch unterschiedliche Stellgeschwindigkeiten in entgegengesetzten Stellrichtungen erzielt werden, ohne hierfür verschiedene Druckniveaus und verschiedene Strömungsmengen der Hydraulikbeaufschlagung zu benötigen, was natürlich gleichwohl vorgesehen sein kann. Insbesondere kann ein Kolbenabschnitt und die zugehörige Zylinderdruckkammer optimal an die Aufschwenkbewegung und der andere Kolbenabschnitt und die zugehörige Zylinderdruckkammer an die Zuschwenk- bzw. Zugreifbewegung angepasst sein. Trotz der Vorgabe, jeden Kolben auf beiden Schwenkwellen anzuordnen und der damit einhergehenden räumlichen Beschränkungen kann durch die abschnittsweise unterschiedliche Konturierung der Kolben die für das Gehäuse resultierende Druckbeaufschlagung begrenzt und gesteuert werden, ohne hierfür funktionsrelevante Abstriche beim Antriebsmoment der Schwenkwellen und der Greifkraft des Greifers in Kauf nehmen zu müssen.

In vorteilhafter Weiterbildung der Erfindung können die Kolben mit ihren jeweils größeren Kolbenlaufflächen einander zugewandt angeordnet sein, sodass die Querschnittsfläche der äußeren Druckkammern, die zu den seitlichen Stirnwandungen, insbesondere Gehäusedeckeln, des Antriebsgehäuses angeordnet sind, kleiner ist als die Querschnittsfläche der zumindest einen, zwischen den Kolben liegenden inneren Druckkammer. Hierdurch werden die Druckkräfte auf die genannten Stirnwandungen aufgrund der kleineren Fläche geringer. Bei der größeren, zwischen den Kolben liegenden Druckkammer spielen solche Axialkräfte keine relevante Rolle. Bei einer gemeinsamen Druckkammer zwischen den Kolben gibt es keine Trennwandung, die axial vom Hydraulikdruck beaufschlagt werden würde. Auch wenn zwei separate Druckkammern zwischen den Kolben vorgesehen und durch eine Trennwandung voneinander getrennt sind, kompensieren sich die Axialdrücke auf die genannte Trennwand, da diese dann von gegenüberliegenden Seiten mit entsprechenden Drücken beaufschlagt wird.

Vorteilhafterweise kann die Orientierung der Schraubeingriffsabschnitte an den Kolben und Schwenkwellen derart mit den verschiedenen Druckkammern zusammenwirken, dass die kleineren, das heißt von der effektiven Querschnittsfläche her kleineren Druckkammer ein Aufschwenken der an den Schwenkwellen angekuppelten Greiferarme bzw. -schalen bewirken, während umgekehrt das Zusammenschwenken der Greiferarme vom größeren Zylinderdruckkammerquerschnitt bewirkt wird. Hierdurch können bei an sich gleichem Drucknivau höhere Greifkräfte erzielt werden, während umgekehrt für das Aufschwenken kleinere Antriebsmomente ausreichend sind. Zusätzlich kann ohne spezielle Steuerungsmittel für die Strömungsmengen eine sozusagen natürliche Anpassung der Stellgeschwindigkeiten an die Greiferfunktionen erzielt werden: während einerseits beim Zugreifen eine feinere, besser kontrollierbare Stellbewegung zum Tragen kommt, wird der Greifer bei gleicher Strömungsmenge des Hydraulikmittels schneller aufgeschwenkt, da sich die Druckkammern mit kleinerem Querschnitt schneller füllen.

Die unterschiedliche Konturierung der verschiedenen Kolbenabschnitte kann an die unterschiedlichen Größen der Querschnittsflächen angepasst sein, insbesondere dergestalt, dass in der querschnittsflächenmäßig größeren Zylinderdruckkammer der Kolben- und Zylinderdruckkammerquerschnitt weniger flachgedrückt ist als in den flächenmäßig kleineren Druckkammern. Dem liegt die Überlegung zugrunde, dass in den querschnittsflächenmäßig größeren Druckkammern der Umfang der Kolbenlauffläche und damit der Umfang der Mantelfläche der Zylinderdruckkammer länger ist als in den querschnittsflächenmäßig kleineren Druckkammern, sodass die Gehäusewandung im Bereich der querschnittsflächenmäßig größeren Zylinderdruckkammer eine größere Fläche besitzt und daher größeren Radialdruckkräften unterworfen wird als im Bereich der querschnittsflächenmäßig kleineren Zylinderdruckkammer. Dementsprechend können die genannten höheren Radialdruckkräfte auf das Gehäuse im Bereich der querschnittsflächenmäßig größeren Zylinderdruckkammer von der Gehäusewandung besser aufgenommen werden als dies bei einem stärker flachgedrückten Querschnitt der Fall wäre, da flachgedrückte Querschnitte unter hohen Innendrücken dazu neigen, aufgedrückt zu werden, das heißt die kurze Hauptachse wird gelängt, während die lange Hauptachse gekürzt wird.

Insofern kann durch die unterschiedliche Querschnittskonturierung im Zusammenspiel mit den unterschiedlichen Querschnittsflächen das Material der Gehäusewandung bestmöglich ausgenutzt und mit einer dünnwandigen, leichten Bauweise die Radialdruckbeaufschlagung bestmöglich abgefangen werden, obwohl an sich das Abweichen von der flachgedrückten Kolbenkontur, die an sich vom Umstand der beiden voneinander beabstandeten Schwenkwellen vorgegeben ist, widersinnig erscheint, da man an sich Einbußen bezüglich einer kleinen Baugröße und damit einem höheren Gewicht rechnen würde. Da jedoch die Radialdruckkräfte eine geringe Spreizwirkung haben, wenn der Gehäusequerschnitt weniger flachgedrückt ist, kann durch eine dünnere Wandungsdicke ein Gewichtsvorteil erzielt werden.

Vorteilhafterweise kann der weniger flachgedrückte Kolbenabschnitt eine zumindest näherungsweise kreisförmige Querschnittskonturierung besitzen. Die zugehörige Zylinderdruckkammer, die vorzugsweise die querschnittsflächenmäßig größere Zylinderdruckkammer ist, besitzt dann dementsprechend Kreiszylinderform.

Der stärker flachgedrückte Kolbenabschnitt kann oval oder elliptisch oder in ähnlicher Weise abgerundet ausgebildet sein, wobei die Zylinderdruckkammer, in der dieser ovale oder elliptische oder in anderer Weise abgerundete Kolbenabschnitt läuft, eine entsprechend ovale oder elliptische oder in anderer Weise abgerundete Zylinderquerschnittskontur besitzt.

Die kreiszylindrische Ausbildung der größeren Zylinderdruckkammer kann die dort entsprechend höheren Radialkräfte auf die Zylinderwandung bestmöglich abfangen, wodurch hier mit kleinen Wandstärken gearbeitet werden und eine entsprechende Gewichtsersparnis erreicht werden kann, wenn man dies im Vergleich zu einer entsprechend flachgedrückten Zylinderkammer betrachtet.

Je nachdem, wie stark die Querschnittsfläche der flachgedrückten Zylinderkammer von der Querschnittsfläche der weniger flachgedrückten Zylinderkammer abweicht, insbesondere verkleinert ist, können die Wandstärken der mantelflächenseitigen Zylinderdruckkammerwandungen verschieden gewählt sein, da dann der durch die Querschnittsflächenverkleinerung auftretende Verkleinerungseffekt der Radialkräfte mehr oder weniger zum Tragen kommt. In Weiterbildung der Erfindung kann das Antriebsgehäuse in einem Abschnitt zwischen den Kolben, der die querschnittsflächenmäßig größere Druckkammer begrenzt, eine geringere Wandstärke besitzen als in einem Gehäuseabschnitt, der die äußeren, seitlichen Druckkammern mantelflächenseitig begrenzt. Alternativ können jedoch auch gleiche Wandstärken in den genannten Mantelflächenabschnitten vorgesehen sein, wobei bei stärkeren Querschnittsflächenunterschieden der Druckkammern auch in Betracht kommt, die Wandstärke des Gehäusemantels im Bereich der seitlichen, kleineren Druckkammern dünner auszubilden als im zentralen Gehäuseabschnitt, der die größere Druckkammer mantelflächenseitig begrenzt.

Je nach Verwendungszweck können die Schwenkwellen gegenläufige oder gleichläufige Schwenkbewegungen ausführen, wobei bei Einsatz als Greiferantrieb insbesondere eine Gegenläufigkeit der Schwenkwellenantriebsbewegungen vorgesehen sein kann. In an sich bekannter Weise können die beiden Schwenkwellen jeweils zwei zueinander gegenläufig orientierte Schraubeingriffsabschnitte besitzen, die mit jeweils einem der beiden Wellenantriebsstücke in Schraubeingriff stehen, so dass eine Drehung der Schwenkwellen in die eine Richtung durch ein Zusammenfahren der beiden Wellenantriebsstücke und eine Drehung der Schwenkwellen in die entgegengesetzte Richtung durch ein Auseinanderfahren der beiden Wellenantriebsstücke erreicht wird. Ein Drehen in die eine Richtung bzw. ein Drehen in die andere Richtung meint dabei vorteilhafterweise nicht, dass sich beide Wellen in dieselbe Richtung drehen, sondern dass sich die beiden Schwenkwellen jeweils in entgegengesetzte Richtungen drehen, insbesondere um einmal ein Auseinanderschwenken der Greiferschalen und das andere mal ein Zusammenschwenken der Greiferschalen zu erzielen.

In Weiterbildung der Erfindung können die Kolben vorzugsweise zu ihren einander zugewandten Seiten hin angeordnete Dichtungsabschnitte aufweisen, die auf den Schwenkwellen laufen. Die Schwenkwellen können hierbei vorteilhafterweise jeweils zwischen ihren gegenläufigen Schraubeingriffabschnitten einen verzahnungsfreien Abschnitt besitzen, auf dem die vorgenannten Dichtungsabschnitte der Kolben laufen. Insbesondere können die besagten verzahnungsfreien Abschnitte eine glatte, zylindrische Oberfläche besitzen und einen mindestens so großen Durchmesser wie die Schraubeingriffsabschnitte besitzen, so dass die Dichtungsabschnitte der Kolben passgenau auf den genannten verzahnungsfreien Abschnitten gleiten können. Hierdurch kann nicht nur eine Stabilisierung der Kolben gegenüber Kippmomenten erreicht werden, sondern auch eine Abdichtung der Kolben an den Schwenkwellen erzielt werden.

Zusätzlich zur genannten Kolbendichtung gegenüber den Schwenkwellen sind die Kolben vorteilhafterweise auch zur Außenseite hin, das heißt den Innenmantelflächen der Zylinderdruckkammern abgedichtet. In Weiterbildung der Erfindung besitzt hierbei jede der unterschiedlich konturierten Kolbenlauflächen eines jeden Kolbens einen Dichtungsabschnitt, mit denen die beiden Kolbenlaufflächen eines jeden Kolbens einerseits zur Mantelfläche der größeren Zylinderdruckkammer und andererseits zur Mantelfläche der kleineren Zylinderdruckkammer gedichtet ist.

Die Steigung der Schraubeingriffsabschnitte kann grundsätzlich verschieden gewählt werden und an den zu erzielenden Schwenkwinkel der Schwenkwellen einerseits und die zu erzielenden Drehmomente an den Schwenkwellen angepasst werden. Ein günstiger Kompromiss für die vorgeschlagene Anordnung von zwei gegenläufigen Wellenantriebsstücken besteht in Weiterbildung der Erfindung darin, dass die gegenläufigen Schraubeingriffsabschnitte der Schwenkwellen jeweils einen Steigungswinkel im Bereich von 30° bis 60° aufweisen. Vorzugsweise beträgt der genannte Steigungswinkel zwischen 40° und 50°, wobei er nach einer vorteilhaften Ausführung etwa 45° betragen kann. Wie gesagt sind jedoch grundsätzlich verschiedene Steigungswinkel möglich, je nachdem, welche Schwenkwinkel die Schwenkwellen erzielen müssen und welche Drehmomente dabei erreicht werden müssen.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische, schematische Darstellung eines hydraulischen Schwenkantriebs mit zwei Schwenkwellen und einem Paar gegenläufig antreibbarer Wellenantriebsstücke zum Antreiben der Schwenkwellen in einem Teilschnitt, wobei in dem frei geschnittenen Abschnitt der Darstellung die beiden Wellenantriebsstücke und eine der Schwenkwellen ersichtlich sind,
- Fig. 2:: eine ausschnittsweise perspektivische Darstellung der beiden Kolben und der beiden Schwenkwellen, auf denen die Kolben sitzen, die die verschieden geformten Kolbenlaufflächen zeigt,
- Fig. 3:: eine stirnseite Seitenansicht des Schwenkantriebs, die die beiden herausstehenden Abschnitte der Schwenkwellen zeigt,
- Fig. 4:: einen Längsschnitt durch die beiden Schwenkwellen des Schwenkantriebs entlang der Linie C-C in Figur 3, wobei die beiden Kolben in ihrer zusammengefahrenen Stellung gezeigt sind, die einer aufgeschwenkten Stellung des Greifers entsprechen kann,
- Fig. 5:: einen Längsschnitt durch die beiden Schwenkwellen des Schwenkantriebs ähnlich Fig. 4, wobei die beiden Kolben in ihrer auseinandergefahrenen Stellung gezeigt sind, die einer zusammengeschwenkten Stellung des Greifers entsprechen kann,
- Fig. 6:: eine stirnseitige Ansicht des Schwenkantriebs ähnlich Fig. 3, wobei weitere Schnittebenen eingezeichnet sind, die dann in den Fig. 7 und 8 dargestellt sind,
- Fig. 7:: einen Längsschnitt durch eine der Schwenkwellen entlang der Linie A-A in Fig. 6, was einem Längsschnitt entspricht, der im Vergleich zu den Längsschnitten der Fig. 4 und 5 senkrechten Ebene geführt ist, und
- Fig. 8:: einen Längsschnitt durch den Schwenkantrieb zwischen dessen beiden Schwenkwellen entlang der Linie B-B in Fig. 6, wonach eine der beiden Schwenkwellen ungeschnitten gezeigt ist.

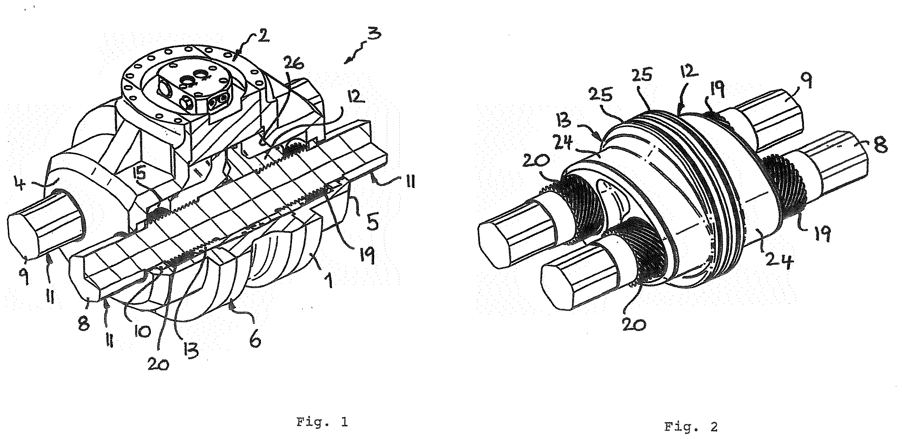

Der in Figur 1 dargestellte Schwenkantrieb 3 umfasst ein Antriebsgehäuse 1, das als Schalenträger ausgebildet ist und in an sich üblicher Weise an den Stiel eines Baggers oder eines anderen Hebezeugs ankuppelbar ist. Das Antriebsgehäuse 1 kann an seiner Oberseite ein ringförmiges Drehlager 2 sowie einen diesem zugeordneten, nicht näher gezeigten Drehantrieb aufweisen, um den Greifer um eine aufrechte Achse drehen zu können.

Das Gehäuse 1 umfasst zwei zueinander parallele Stirnwandungen 4 und 5, die durch eine ggf. mehrteilige Gehäuseschale 6 miteinander verbunden sind, so dass die Stirnwandungen 4 und 5 zusammen mit der Gehäuseschalen 6 einen Innenraum 7 begrenzen.

Im Inneren des Gehäuses 1 sind die beiden Schwenkwellen 8 und 9 parallel zueinander und voneinander beabstandet angeordnet. Sie sind in den Stirnwandungen 4 und 5 drehbar, jedoch axial fest jeweils mittels eines Lagers 10 gelagert und ragen mit ihren zapfenförmigen Wellenenden 11 aus dem Gehäuse heraus. An den zapfenförmigen Wellenenden 11 können in an sich bekannter Weise Greiferschalen, die in der Zeichnung nicht gezeigt sind, drehfest angekuppelt werden, so dass die Greiferschalen durch Verdrehen der Schwenkwellen 8 und 9 auf- und zugeschwenkt werden können.

Um die Schwenkwellen 8 und 9 rotatorisch anzutreiben, sind zwei gegenläufig antreibbare Kolben 12 und 13 vorgesehen, die jeweils die beiden Schwenkwellen 8 und 9 umgreifen und mit der jeweiligen Schwenkwelle 8 bzw. 9 in Schraubeingriff stehen. Wie Figur 1 und 2 zeigen, kann jeder Kolben 12 und 13 im Inneren des Antriebsgehäuses 1 parallel zu den Schwenkwellen 8 und 9 verschieblich sitzen. Das Gehäuse 1 bildet die Zylinder für die Wellenantriebsstücke 12 und 13, zu deren beiden äußeren Seiten jeweils eine Druckkammer 15 und 16 und zwischen denen eine gemeinsame Druckkammer 17 oder ggf. zwei separate Druckkammern gebildet sind. Durch Einleiten von Hydraulikflüssigkeit in die Druckkammern 15 und 16 können die Wellenantriebsstücke 12 und 13 aufeinander zu und durch Einleiten in die Druckkammer 17 auseinander bewegt und damit die Schwenkwellen 8 und 9 entsprechend gedreht werden.

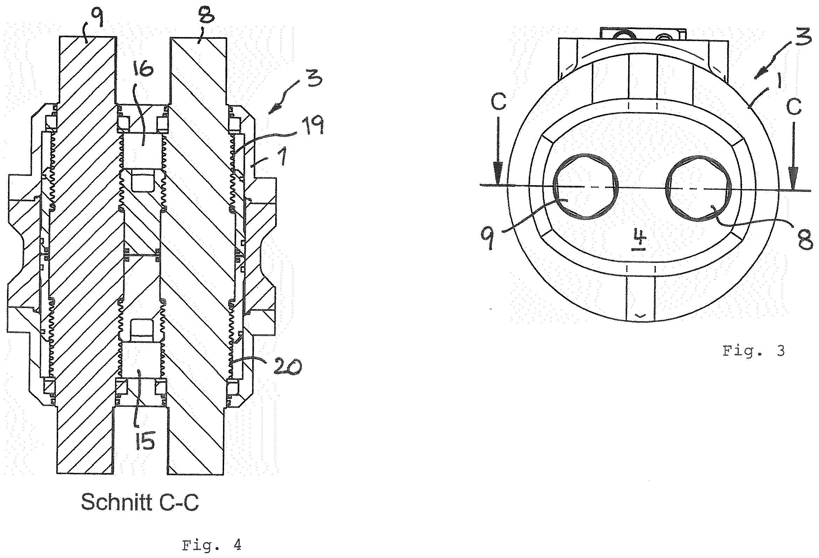

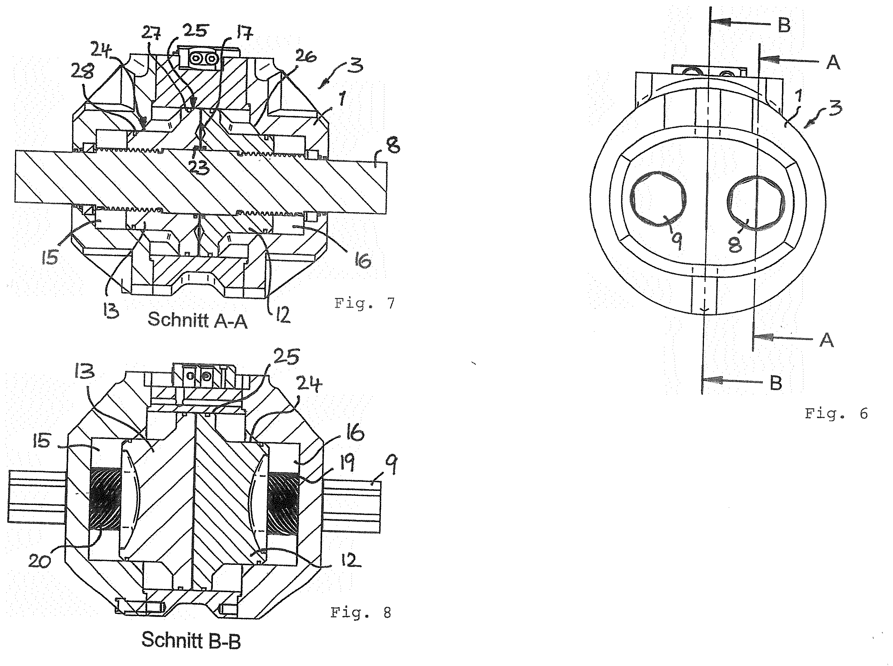

Wie Figur 3 oder Figur 8 zeigt, besitzt dabei jede Schwenkwelle 8 und 9 zwei gegenläufig ausgebildete Schraubeingriffsabschnitte 19 und 20, deren Schraubverzahnungen entgegengesetzte Steigungen besitzen. In der Figur 8 ist der dort links dargestellte Schraubeingriffsabschnitt 19 als Rechtsgewinde und der dort rechts dargestellte Schraubeingriffsabschnitt 20 als Linksgewinde ausgebildet. Auch wenn dies nicht zwangsweise vorzusehen ist, besitzen die beiden Schraubeingriffabschnitte 19 und 20 vorteilhafterweise betragsmäßig denselben Steigungswinkel, der vorteilhafterweise im Bereich von 30° bis 60° liegen kann, beispielsweise 45° betragen kann.

Zwischen den beiden Schraubeingriffsabschnitten 19 und 20 besitzt jede Schwenkwelle 8 bzw. 9 einen verzahnungsfreien Abschnitt 21, der eine glatte, zylindrische Oberfläche besitzt und vorteilhafterweise einen leicht größeren Durchmesser besitzen kann als der äußere Durchmesser der Schraubeingriffsabschnitte 19 und 20. Wie in Fig. 4 oder 7 dargestellt, kann der verzahnungsfreie Abschnitt 21 von den Schraubeingriffsabschnitten 19 und 20 durch einen Freistich 22 abgesetzt sein. Obwohl nicht eigens gezeichnet, könnte der verzahnungsfreie Abschnitt 21 in zwei Unterabschnitte unterteilt sein, von denen jeder einem der Schraubeingriffsabschnitte 19 bzw. 20 zugeordnet ist.

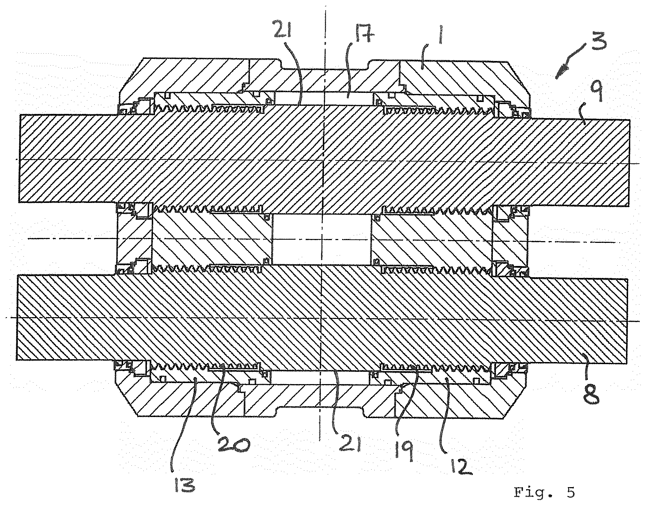

Wie Figur 4 und 5 zeigen, besitzen die beiden Kolben 12 bzw. 13 jeweils einen Dichtungsabschnitt 23, der ebenfalls rohrförmig ausgebildet ist und die jeweilige Schwenkwelle 8 bzw. 9 umgreift. Wie Figur 4 und 5 verdeutlichen, können die besagten Dichtungsabschnitte 23 auf dem verzahnungsfreien Abschnitt 21 der jeweiligen Schwenkwelle laufen, um eine Führung sowie eine Abdichtung der Kolben 12 und 13 gegenüber den Schwenkwellen 8 und 9 zu erreichen.

Wie Figur 1 zeigt, sind die Kolben 12 und 13 mit ihrer Außenkontur an die von dem Gehäuse 1 definierte Innenkontur, die die Zylinder bzw. Druckkammern 15, 16 und 17 bildet, angepasst und durch geeignete Dichtungsmittel abgedichtet.

Wie die Figuren zeigen, besitzen dabei die seitlichen, außenliegenden Druckkammern 15 und 16 einerseits und die innenliegende Druckkammer 17 zwischen den Kolben 12 und 13 andererseits verschiedene Querschnittskonturen und auch betragsmäßig verschiedene Querschnittsflächen. Damit jeder Kolben 12 und 13 in solchermaßen verschieden geformten und verschieden großen Druckkammern 15 und 17 bzw. 16 und 17 laufen kann, besitzt jeder Kolben 12 und 13 zwei unterschiedlich geformte Kolbenlaufflächen 24 und 25, die an axial verschiedenen Kolbenabschnitten vorgesehen sind und von entsprechenden Außenmantelflächenabschnitten des Kolbens 12 oder 13 gebildet sind. Wie Figur 2 zeigt, besitzt jeder der Kolben 12 und 13 eine stärker flachgedrückte Kolbenlauffläche 24 und eine weniger flachgedrückte Kolbenlauffläche 25, wobei die Anordnung der beiden Kolbenlaufflächen 24 und 25 vorteilhafterweise derart getroffen sein kann, dass - in Längsrichtung der Schwenkwellen betrachtet - die stärker flachgedrückte Kolbenlauffläche 24 vollständig innerhalb der Kontur der weniger flachgedrückten Kolbenlauffläche 25 angeordnet ist. Insbesondere kann auch die längere Hauptachse der stärker flachgedrückten Kolbenlauffläche 24 noch kürzer sein als die entsprechende Hauptachse und/oder der Durchmesser der weniger flachgedrückten Kolbenlauffläche 25, vgl. Figur 2.

In vorteilhafter Weiterbildung der Erfindung kann die weniger flachgedrückte Kolbenlauffläche 25 zumindest näherungsweise kreisförmig konturiert sein, während - unabhängig von einer kreisförmigen oder nicht exakt kreisförmigen Konturierung des genannten weniger flachgedrückten Kolbenabschnitts 25 - die stärker flachgedrückte Kolbenlauffläche vorteilhafterweise ovale oder elliptische oder in ähnlicher Weise abgerundete Umfangskontur besitzen kann, vgl. Figur 2.

In vorteilhafter Weiterbildung der Erfindung erstreckt sich dabei die längerer Hauptachse des Querschnitts der flachgedrückten Kolbenlauffläche 25 parallel zu einer Verbindungsgeraden durch die beiden Schwenkwellen 8 und 9, während sich die kürzere Hauptachse des Querschnitts der flachgedrückteren Kolbenlauffläche 24 senkrecht zu einer die beiden Schwenkwellen 8 und 9 verbindenen Ebene erstreckt. Ist die weniger flachgedrückte Kolbenlauffläche 25 nicht exakt kreisförmig am Umfang konturiert, sondern auch leicht flachgedrückt, können die längeren und kürzeren Hauptachsen der Querschnittskontur der weniger flachgedrückten Kolbenlauffläche 25 in entsprechender Weise ausgerichtet sein.

Wie Figur 2 zeigt, kann jeder der Kolben 12 und 13 im Bereich zwischen den genannten Kolbenlaufflächen 24 und 25 einen abgeschrägten Konturverlauf besitzen, sodass der jeweilige Kolben 12 bzw. 13 keine rechtwinklige Treppenstufe zwischen den beiden Kolbenlaufflächen 24 und 25 ausbildet, vgl. Figur 2.

An die genannten Kolbenlaufflächen 24 und 25 angepasst sind die von Gehäuseabschnitten des Antriebsgehäuses 1 gebildeten Mantelflächen der zugehörigen Zylinderdruckkammern 15 und 16 bzw. 17. Wie insbesondere Figur 1 zeigt, sind die mantelflächenseitigen Wandungen des Antriebsgehäuses 1 im Bereich der seitlichen, äußeren Druckkammern 15 und 16 oval oder elliptisch bzw. in ähnlicher Weise abgerundet konturiert, sodass die genannten Druckkammern 15 und 16 eine ovale, elliptische oder in ähnlicher Weise abgerundete Zylinderform besitzen. Im Gegensatz hierzu ist der Zentralabschnitt der Gehäuseschale 6, der im Bereich zwischen den Kolben 12 und 13 die innere Druckkammer 17 begrenzt, weniger stark flachgedrückt und insbesondere etwa - im Querschnitt senkrecht zu den Wellenlängsachsen betrachtet - zumindest näherungsweise kreisförmig konturiert, sodass die Kolbenlaufflächen 25 der beiden Kolben 12 und 13 in einer zumindest näherungsweise kreiszylindrischen Zylinderdruckkammer 17 laufen.

Wie die Figuren 1, 7 und 8 zeigen, ist zwischen der kreiszylindrischen, inneren Druckkammer 17 und den seitlichen, äußeren Druckkammern 15 und 16 ein abgeschrägter Mantelflächenübergang an der Gehäuseschale 6 vorgesehen, vgl. Bezugsziffer 26 in den Figuren 1, 7 und 8, um einer Abschrägung zwischen den Kolbenlaufflächen 24 und 25 Raum zu geben. Beispielsweise kann zwischen den Kolbenlaufflächen 24 und 25 und/oder zwischen der inneren Druckkammer 17 und den äußeren Druckkammern 15 und 16 eine Abschrägung unter einem Winkel von etwa 45° zu einer Ebene vorgesehen sein, die zu den Schwenkwellenlängsachsen senkrecht steht. Andere Abschrägungswinkel und/oder gerundete Abschrägungsübergänge können jedoch auch vorgesehen sein.

## Patentansprüche

1. Hydraulischer Schwenkantrieb für einen Greifer, der zwei zangenartig bewegbare Greifarme oder -schalen besitzt, mit zwei in einem Antriebsgehäuse (1) drehbar gelagerten, zueinander parallelen Schwenkwellen (8, 9), deren Wellenenden (11) mit den Greifarmen verbindbar sind, wobei die Schwenkwellen (8, 9) jeweils zwei zueinander gegenläufige Schraubeingriffsabschnitte (19, 20) besitzen, mit denen zwei gegenläufig verfahrbare Kolben (12, 13) zum Antreiben der Schwenkwellen (8, 9) in Schraubeingriff stehen, **dadurch gekennzeichnet dass** die Kolben (12, 13) jeweils zwei außenmantelflächenseitige Kolbenlaufflächen (24, 25) besitzen, die im Querschnitt unterschiedlich geformt sind und in unterschiedlich großen und im Querschnitt unterschiedlich geformten, vom Antriebsgehäuse (1) gebildeten Zylinderdruckkammern (15, 16; 17) laufend angeordnet sind.

2. Hydraulischer Schwenkantrieb nach dem vorhergehenden Anspruch, wobei die Kolben (12, 13) mit ihren jeweils größeren Kolbenlaufflächen (25) einander zugewandt angeordnet sind.

3. Hydraulischer Schwenkantrieb nach einem der vorhergehenden Ansprüche, wobei die Kolben (12, 13) zwischen sich zumindest eine Druckkammer (17) begrenzen, deren Querschnittsfläche größer ist als die Querschnittsfläche der Druckkammern (15, 16), die auf den einander abgewandten Seiten der beiden Kolben (12, 13) vorgesehen sind.

4. Hydraulischer Schwenkantrieb nach einem der vorhergehenden Ansprüche, wobei von den genannten Kolbenlaufflächen (24, 25) eines jeden Kolbens (12, 13) eine Kolbenlauffläche (25) im Querschnitt betrachtet weniger flachgedrückt und die andere Kolbenlauffläche (24) stärker flachgedrückt ist.

5. Hydraulischer Schwenkantrieb nach dem vorhergehenden Anspruch, wobei die weniger flachgedrückte Kolbenlauffläche (25) einen zumindest näherungsweise kreisförmigen Querschnitt und/oder die stärker flachgedrückte Kolbenlauffläche (24) einen ovalen oder elliptischen Querschnitt besitzt.

6. Hydraulischer Schwenkantrieb nach einem der beiden vorhergehenden Ansprüche, wobei in Schwenkachsenlängsrichtung betrachtet die Kontur der stärker flachgedrückten Kolbenlauffläche (24) vollständig innerhalb der Kontur der weniger flachgedrückten Kolbenlauffläche (25) liegt, wobei vorzugsweise sowohl eine längere Hauptachse als auch eine kürzere Hauptachse des Querschnitts der stärker flachgedrückten Kolbenlauffläche (24) kleiner ist als ein Durchmesser der weniger flachgedrückten Kolbenlauffläche (25) oder als die kürzeren und längeren Hauptachsen des Querschnitts der genannten weniger flachgedrückten Kolbenlauffläche (25).

7. Hydraulischer Schwenkantrieb nach einem der drei vorhergehenden Ansprüche, wobei die stärker flachgedrückte Kolbenlauffläche (24) derart ausgerichtet ist, dass sich eine längere Hauptachse des Querschnitts dieser stärker flachgedrückten Kolbenlauffläche (24) parallel zu einer Verbindungsebene, die die beiden Schwenkwellen (8, 9) verbindet, erstreckt und die kürzere Hauptachse des Querschnitts der genannten stärker flachgedrückten Kolbenlauffläche (24) senkrecht zu der genannten Verbindungsebene steht.

8. Hydraulischer Schwenkantrieb nach einem der vorhergehenden Ansprüche, wobei das Antriebsgehäuse (1) zwischen den Kolben (12, 13) zumindest eine kreiszylindrische Zylinderdruckkammer (17) definiert und auf den einander abgewandten Seiten der Kolben (12, 13) zwei Zylinderdruckkammern (15, 16) mit von der Kreiszylinderform abweichenden Zylinderform, insbesondere mit ovalem oder elliptischem Querschnitt, definiert.

9. Hydraulischer Schwenkantrieb nach einem der vorhergehenden Ansprüche, wobei das Antriebsgehäuse (1) im Bereich seiner Mantelfläche, die die Druckkammer (17) zwischen den Kolben (12, 13) begrenzt, eine andere Wandstärke besitzt als im Bereich eines mantelflächenseitigen Abschnitts, der die äußeren Druckkammern (15, 16) auf den einander abgewandten Seiten der Kolben (12, 13) begrenzt.

10. Hydraulischer Schwenkantrieb nach einem der vorhergehenden Ansprüche, wobei jeder Kolben (12, 13) an jeder seinen Kolbenlaufflächen (24, 25) einen Dichtungsabschnitt (27, 28) zum mantelflächenseitigen Abdichten gegen die größeren und kleineren Druckkammern (15, 16; 17) aufweist.

11. Hydraulischer Schwenkantrieb nach einem der vorhergehenden Ansprüche, wobei jeder Kolben (12, 13) auf seiner dem jeweils anderen Kolben (13, 12) zugewandten Seite einen Wellendichtungsabschnitt (23) zum Dichten gegen die Schwenkwellen (8, 9) aufweist.

12. Hydraulischer Schwenkantrieb nach einem der vorhergehenden Ansprüche, wobei die Schwenkwellen (8, 9) jeweils zwischen ihren gegenläufigen Schraubeingriffsabschnitten (19, 20) einen verzahnungsfreien Abschnitt (21) besitzen.

13. Hydraulischer Schwenkantrieb nach den beiden vorhergehenden Ansprüchen, wobei der verzahnungsfreie Abschnitt (21) einen Führungs- und/oder Dichtungsabschnitt bildet, auf dem die Dichtungsabschnitte (23) der Kolben (12, 13) längsverschieblich sitzen.

14. Hydraulischer Schwenkantrieb nach einem der vorhergehenden Ansprüche, wobei die querschnittsflächenmäßig größere Kolbenlauffläche (25) der Kolben (12, 13) eine Querschnittsfläche im Bereich von 125% bis 300% der Querschnittsfläche der kleinere Kolbenlauffläche (24) besitzt.

15. Hydraulischer Schwenkantrieb nach einem der vorhergehenden Ansprüche, wobei die Schraubeingriffsabschnitte (19, 20) einen Steigungswinkel im Bereich zwischen 30° und 60°, vorzugsweise etwa 40° bis 50°, aufweisen.

16. Greifer, insbesondere Zweischalengreifer, mit einem hydraulischen Schwenkantrieb, der gemäß einem der vorhergehenden Ansprüche ausgebildet ist.

## Claims

1. A hydraulic swivel drive for a grab which has two gripping arms or shells movable like tongs, comprising two swivel shafts (8, 9) rotatably mounted in a drive housing (1) and parallel to each other, whose shaft ends (11) are connectable with the gripping arms, wherein the swivel shafts (8, 9) each have two oppositely threaded screw engagement portions (19, 20), with which two pistons (12, 13) movable in opposite directions for driving the swivel shafts (8, 9) are in screw engagement, **characterized in that** the pistons (12, 13) each have two piston running surfaces (24, 25) on the outer shell surface, which are shaped differently in cross-section and are arranged to run in differently large cylinder pressure chambers (15, 16; 17) shaped differently in cross-section, which are formed by the drive housing (1).

2. The hydraulic swivel drive according to the preceding claim, wherein the pistons (12, 13) are arranged to face each other with their respective larger piston running surfaces (25).

3. The hydraulic swivel drive according to one of the preceding claims, wherein the pistons (12, 13) between themselves define at least one pressure chamber (17) whose cross-sectional area is larger than the cross-sectional area of the pressure chambers (15, 16) which are provided on the sides of the two pistons (12, 13) facing away from each other.

4. The hydraulic swivel drive according to one of the preceding claims, wherein, among said piston running surfaces (24, 25) of each piston (12, 13) one piston running surface (25) is flattened less as seen in cross-section, and the other piston running surface (24) is flattened more strongly.

5. The hydraulic swivel drive according to the preceding claim, wherein the less flattened piston running surface (25) has an at least approximately circular cross- section and/or the more strongly flattened piston running surface (24) has an oval and/or elliptical cross-section.

6. The hydraulic swivel drive according to one of the two preceding claims,
wherein as seen in longitudinal direction of the swivel axis the contour of the more strongly flattened piston running surface (24) lies completely within the contour of the less flattened piston running surface (25), wherein preferably both a longer main axis and a shorter main axis of the cross-section of the more strongly flattened piston running surface (24) is smaller than a diameter of the less flattened piston running surface (25) or than the shorter and longer main axes of the cross-section of said less flattened piston running surface (25).

7. The hydraulic swivel drive according to one of the three preceding claims, wherein the more strongly flattened piston running surface (24) is aligned such that a longer main axis of the cross-section of this more strongly flattened piston running surface (24) extends parallel to a connecting plane which connects the two swivel shafts (8, 9) and the shorter main axis of the cross-section of said more strongly flattened piston running surface (24) is vertical to said connecting plane.

8. The hydraulic swivel drive according to one of the preceding claims, wherein the drive housing (1) defines at least one circular-cylindrical cylinder pressure chamber (17) between the pistons (12, 13) and on the sides of the pistons (12, 13) facing away from each other defines two cylinder pressure chambers (15, 16) with a cylindrical shape deviating from the circular-cylindrical shape, in particular with oval or elliptical cross-section.

9. The hydraulic swivel drive according to one of the preceding claims, wherein the drive housing (1) in the region of its shell surface, which defines the pressure chamber (17) between the pistons (12, 13), has a different wall thickness than in the region of a shell-surface-side portion which defines the outer pressure chambers (15, 16) on the sides of the pistons (12, 13) facing away from each other.

10. The hydraulic swivel drive according to one of the preceding claims, wherein each piston (12, 13) on each of its piston running surfaces (24, 25) comprises a sealing portion (27, 28) for sealing the shell surface with respect to the larger and smaller pressure chambers (15, 16; 17).

11. The hydraulic swivel drive according to one of the preceding claims, wherein each piston (12, 13) on its side facing the respective other piston (13, 12) comprises a shaft sealing portion (23) for sealing against the swivel shafts (8, 9).

12. The hydraulic swivel drive according to one of the preceding claims, wherein the swivel shafts (8, 9) each have a toothing-free portion (21) between their oppositely threaded screw engagement portions (19, 20).

13. The hydraulic swivel drive according to the two preceding claims, wherein the toothing-free portion (21) forms a guiding and/or sealing portion on which the sealing portions (23) of the pistons (12, 13) are longitudinally-displayceably seated.

14. The hydraulic swivel drive according to one of the preceding claims, wherein the piston running surface (25) of larger cross-sectional area of the pistons (12, 13) has a cross-sectional area in the range from 125 % to 300 % of the cross-sectional area of the smaller piston running surface (24).

15. The hydraulic swivel drive according to one of the preceding claims, wherein the screw engagement portions (19, 20) have a pitch angle in the range between 30° and 60°, preferably about 40° to 50°.

16. A grab, in particular clamshell grab, with a hydraulic swivel drive which is formed according to one of the preceding claims.

## Revendications

1. Entraînement pivotant hydraulique pour un grappin qui possède deux bras ou deux coques de préhension déplaçables à la manière d'une pince, comprenant deux arbres pivotants (8, 9) logés de manière rotative dans un carter d'entraînement (1), parallèles l'un à l'autre, dont les bouts d'arbre (11) peuvent être reliés aux bras de préhension, les arbres pivotants (8, 9) possédant respectivement deux sections de préhension par vissage (19, 20), inverses l'une par rapport à l'autre, avec lesquelles deux pistons (12, 13) déplaçables de manière inverse sont en prise de manière vissée pour entraîner les arbres pivotants (8, 9), **caractérisé en ce que** les pistons (12, 13) possèdent respectivement deux surfaces de roulement de piston (24, 25) côté surface d'enveloppe extérieure, lesquelles sont formées différemment en section transversale et sont disposées en se déplaçant dans des chambres de pression de cylindre (15, 16 ; 17) de formes différentes en section transversale, réalisées par le carter d'entraînement (1).

2. Entraînement pivotant hydraulique selon la revendication précédente, les pistons (12, 13) étant disposés de manière à être tournés l'un vers l'autre avec leurs surfaces de roulement de piston (25) respectivement plus grandes.

3. Entraînement pivotant hydraulique selon l'une quelconque des revendications précédentes, les pistons (12, 13) délimitant entre eux au moins une chambre de pression (17), dont la surface de la section transversale est plus grande que la surface de la section transversale des chambres de pression (15, 16) qui sont prévues sur les côtés, détournés l'un vers l'autre, des deux pistons (12, 13).

4. Entraînement pivotant hydraulique selon l'une quelconque des revendications précédentes, une surface de roulement de piston (25), des deux dites surfaces de roulement de piston (24, 25) de chaque piston (12, 13), étant, en vue en section transversale, moins aplatie et l'autre surface de roulement de piston (24) étant plus aplatie.

5. Entraînement pivotant hydraulique selon la revendication précédente, la surface de roulement de piston (25) moins aplatie possédant une section transversale au moins approximativement circulaire et/ou la surface de roulement de piston (24) plus aplatie possédant une section transversale ovale ou elliptique.

6. Entraînement pivotant hydraulique selon l'une quelconque des deux revendications précédentes, le contour de la surface de roulement de piston (24) plus aplatie, en vue en direction longitudinale de l'axe de pivotement, étant entièrement situé à l'intérieur du contour de la surface de roulement de piston (25) moins aplatie, de préférence aussi bien un axe principal plus long et un axe principal plus court de la section transversale de la surface de roulement de piston (24) plus aplatie étant plus petits qu'un diamètre de la surface de roulement de piston (25) moins aplatie ou que les axes principaux plus courts et plus longs de la section transversale des dites surfaces de roulement de piston (25) moins aplaties.

7. Entraînement pivotant hydraulique selon l'une quelconque des trois revendications précédentes, la surface de roulement de piston (24) plus aplatie étant orientée de manière à ce qu'un axe principal plus long de la section transversale de cette surface de roulement de piston (24) plus aplatie s'étende parallèlement à un plan de liaison qui relie les deux arbres pivotants (8, 9), et l'axe principal plus court de la section transversale de ladite surface de roulement de piston (24) plus aplatie étant vertical par rapport au dit plan de liaison.

8. Entraînement pivotant hydraulique selon l'une quelconque des revendications précédentes, le carter d'entraînement (1) définissant au moins une chambre de pression de cylindre (17) entre les pistons (12, 13) et définissant sur les côtés des pistons (12, 13), détournés l'un de l'autre, deux chambres de pression de cylindre (15, 16) ayant une forme cylindrique divergeant de la forme cylindrique circulaire, notamment ayant une section ovale ou elliptique.

9. Entraînement pivotant hydraulique selon l'une quelconque des revendications précédentes, le carter d'entraînement (1) possédant dans la partie de sa surface enveloppante, qui délimite la chambre de pression (17) entre les pistons (2, 13), une autre épaisseur de paroi que dans la partie d'une section, côté surface enveloppante, qui délimite les chambres de pression extérieures (15, 16) sur les côtés des pistons (12, 13), détournés l'un de l'autre.

10. Entraînement pivotant hydraulique selon l'une quelconque des revendications précédentes, chaque piston (12, 13) présentant sur chacune de ses surfaces de roulement de piston (24, 25) une section d'étanchéité (27, 28) pour étancher la surface enveloppante, par rapport aux chambres de pression (15, 16 ; 17) plus grandes et plus petites.

11. Entraînement pivotant hydraulique selon l'une quelconque des revendications précédentes, chaque piston (12, 13) présentant sur son côté tourné vers l'autre piston respectif (12, 13) une section d'étanchéité d'arbre (23) pour étancher par rapport aux arbres pivotants (8, 9).

12. Entraînement pivotant hydraulique selon l'une quelconque des revendications précédentes, les arbres pivotants (8, 9) chacun possédant une section (21) exempte d'engrenage entre leurs sections de prise par vissage (19, 20) inverse.

13. Entraînement pivotant hydraulique selon l'une quelconque des deux revendications précédentes, la section (21) exempte d'engrenage formant une section de guidage et/ou d'étanchéité, sur laquelle reposent les sections d'étanchéité (23) des pistons (12, 13) de manière longitudinalement déplaçable.

14. Entraînement pivotant hydraulique selon l'une quelconque des revendications précédentes, la surface de roulement de piston (25), qui est plus grand au point de vue de la surface de la section transversale, des pistons (12, 13) possédant une surface de la section transversale située dans la plage de 125% à 300% de la surface de la section transversale de la plus petite surface de roulement de piston (24).

15. Entraînement pivotant hydraulique selon l'une quelconque des deux revendications précédentes, les sections de prise par vissage (19, 20) présentant un angle de pas situé dans la plage comprise entre 30° et 60°, de préférence d'environ 40° à 50°.

16. Grappin, notamment grappin à deux coques, comprenant un entraînement pivotant hydraulique réalisé selon l'une quelconque des revendications précédentes.
